# EUROPÄISCHE PATENTSCHRIFT

(11) **EP 2 418 551 B1**
(45) Veröffentlichungstag und Bekanntmachung des Hinweises auf die Patenterteilung: **01.05.2013**
(21) Anmeldenummer: 10170572.1
(22) Anmeldetag: 23.07.2010
(51) Int. Cl.: G05B 19/042, G05B 19/05, G05B 19/418

(54) **Diagnoseverfahren für ein nach dem AS-Interface Standard ausgeführtes Feldbussystem**
Diagnosis method for a field bus system designed in accordance with the AS interface standard
Procédé de diagnostic pour un système de bus de terrain exécuté selon la norme d'interface AS

(43) Veröffentlichungstag der Anmeldung: 15.02.2012
(73) Patentinhaber: Siemens Aktiengesellschaft, 80333 München (DE)
(72) Erfinder: Düsel, Ulrich, 91334 Hemhofen (DE)

(56) Entgegenhaltungen:
- DE-A1- 10 038 860
- DE-A1- 19 629 868

## Beschreibung

Die Erfindung betrifft ein Diagnoseverfahren für ein nach dem AS-Interface Standard ausgeführtes Feldbussystem mit einer Masterbaugruppe und mindestens einem Slave.

Ein Feldbus ist ein industrielles Kommunikationssystem auf der untersten Steuerungsebene eines Automatisierungssystems, das eine Vielzahl von Feldgerätebaugruppen wie Messfühler (Sensoren), Stellglieder und Antriebe (Aktoren), aber auch Motorstarter und Frequenzumrichter mit einem übergeordneten Steuerungsgerät verbindet.

AS-Interface (AS-i = Aktor-Sensor-Interface) ist ein möglicher Kommunikationsstandard zur Kommunikation zwischen der mit dem Steuerungsgerät verbundenen Masterbaugruppe und den Feldgerätebaugruppen (Slaves) über einen solchen Feldbus.

Bei einem nach den AS-Interface Spezifikationen ausgebildeten Feldbus hat der Master als einziger das Recht, unaufgefordert auf den Feldbus zuzugreifen. Der Master sendet dabei zyklisch an alle Slaves eine Anfrage und tauscht so mit den Slaves Daten über ein serielles Übertragungsprotokoll mit einer Nutzdatenbreite von 4 Bit aus. Die Slaves dürfen und können von sich aus nicht auf den Feldbus zugreifen und müssen warten, bis sie vom Master gefragt werden. Jedem der Slaves ist dazu eine eindeutige Adresse zugewiesen. In einem AS-Interface können nach derzeitiger Spezifikation (Vers. 3.0) so maximal 62 Teilnehmer an einen Master angeschlossen werden.

Als Übertragungsmedium für den Feldbus wird eine bevorzugt als Flachbandkabel ausgeführte, ungeschirmte zweiadrige Leitung verwendet, die gleichzeitig auch als Stromversorgung für Slaves dienen kann. Das Übertragungsprotokoll wird dazu auf die Spannungsversorgung aufmoduliert. Es kommen dabei die Manchester-Codierung und eine Alternierende Puls Modulation Codierung (APM-Codierung) zum Einsatz. So können Bit-Zeiten von 6µs verwirklicht werden.

Allgemein gilt, dass ein Slave dem Master einen Fehlerzustand (z.B. Überlast der Sensorversorgung) dadurch mitteilen kann, indem er sich vom Bus abmeldet. Die Weiterführung des Betriebs von nicht betroffenen Sensoren oder Aktoren an diesem Slave ist dabei jedoch nicht mehr möglich. Eine tiefer gehende Diagnosemeldung über den Fehler ist hier nicht vorgesehen und prinzipiell wegen der Abmeldung vom Bus nicht möglich.

Das industrielle Feldbussystem AS-Interface, bietet nur sehr begrenzte Möglichkeiten, um Diagnose-Informationen vom Slave zum Master zu übertragen. AS-Interface kennt keine Diagnose-Telegramme wie z.B. unter PROFIBUS. Neben der Kommunikation der reinen Nutzdaten können bei AS-i ebenso Parameterdaten vom Master zum Slave übertragen werden. Die nach aktueller AS-i Spezifikation (Vers. 3.0) zur Verfügung gestellten Diagnoseverfahren erlauben jedoch nur eine sehr eingeschränkte Diagnosemöglichkeit, um den aktuellen Zustand eines einzelnen Slaves im zyklischen Betrieb abzufragen. Hierbei stehen bei heute üblichen Systemen zwei Abfragemöglichkeiten zur Verfügung:
A) Übermittlung eines Standard-Parametertelegramms vom Master zum Slave, in welchem Parameterdaten an den Slave gesandt werden. Die Slaveantwort (Parameterecho) enthält hierbei eine 1-Bit bis 4-Bit Information, worüber eine Fehlermeldung kommuniziert werden kann.
B) Übermittlung eines spezifischem Telegramms von der Masterbaugruppe zu dem Slave, anstelle eines üblichen Parametertelegramms, in welchem Parameterdaten an den Slave gesandt werden. Sofern der Slave anstelle eines gewöhnlichen Parametertelegramms mit dem spezifischen Telegramm angesprochen wurde antwortet er hierauf mit einer 4-Bit Information als Diagnoseinformation. Der Umfang einer derartigen Diagnose ist jedoch doch sehr eingeschränkt, insbesondere wenn dem Slave über die Parametertelegramme neben der Diagnoseabfrage auch Betriebseigenschaften übermittelt werden sollen.

Die DE 196 29 868 A1 offenbart ein Verfahren, in welchem zur Vergrößerung der austauschbaren Datenmenge zwischen einem AS-Interface Master und einem AS-Interface Slave der Parameteraufruf zweckentfremdet wird. Anstelle eines gewöhnlichen Parameteraufrufs und somit einer gewöhnlichen Übertragung von Parameterdaten wird vorzugsweise an nicht parametrierbare AS-Interface Slaves eine Adresse für einen zugeordneten Speicherbereich des AS-Interface Slaves gesandt. Hierdurch kann die austauschbare Datenmenge zwischen AS-Interface Master und AS-Interface Slave vergrößert werden.

Ferner kann über ein sogenannte Periphery Fault Flag der Slave zusätzlich eine Fehlermeldung an den Master absetzen, ohne dass der zyklische Datenaustausch unterbrochen wird. Eine tiefer gehende Diagnose ist jedoch hier nicht möglich, da das Periphery Fault Flag lediglich eine 1 Bit Information (1 = Slave meldet Fehler / 0 = Slave meldet keinen Fehler) an den Master liefert. Bei komplexeren Slavebaugruppen, wie z.B. Motorstartern und Frequenzumrichtern, wird diese 1-Bit Information aus der Verknüpfung einer Vielzahl von möglichen Fehlerursachen im Slave generiert und als 1-Bit Sammelfehlermeldung an den Master zurückgesendet. Die eindeutige Zuordnung, welcher Fehler innerhalb der Slavebaugruppe diese Fehlermeldung verursacht hat, ist für den Anwender jedoch nicht möglich.

Die schnelle Behebung von Fehlern bzw. Störungen ist für einen effizienten Industrieanlagenbetrieb unabdingbar. Zur Erkennung der Störungsursache und Einleitung von Reparatur- und Verbesserungsmaßnahmen genügen die beiden oben beschriebenen einfachen Fehlermeldungen meist nicht. Es wird daher ein Verfahren benötigt, um die Diagnosefähigkeit von AS-Interface zu verbessern, ohne Kompatibilitätsprobleme mit bisherigen Systemkomponenten aufzuwerfen. Diese Diagnose sollte universell verwendbar sein (d.h. mit bisher vorhandenen Slave-Profilen zusammenarbeiten), ohne Unterbrechung oder Verzögerung der zyklischen Daten auskommen und eine genügend große Diagnosedatenmenge übertragen können.

Es ist daher Aufgabe der vorliegenden Erfindung, ein verbessertes Diagnoseverfahren für das AS-i Feldbussystem bereitzustellen, bei welchem eine verbesserte Diagnose der Slaves erfolgen kann, ohne dass es zu einer Unterbrechung oder Verzögerung des zyklischen Datenaustausches zwischen dem Slave und der Masterbaugruppe kommt.

Diese Aufgabe wird mit dem Diagnoseverfahren mit den Merkmalen des Anspruchs 1, d.h. durch ein Diagnoseverfahren für ein nach dem AS-Interface Standard ausgeführtes Feldbussystem mit einer Masterbaugruppe und mindestens einem Slave, welcher dazu ausgebildet ist, Diagnosedaten anhand eines Diagnosedatenpakets darzustellen, wobei das Diagnosedatenpaket durch mindestens zwei Diagnosedatensegmente gebildet wird, mit folgenden Schritten:
a) Senden eines an den Slave adressierten Parametertelegramms von der Masterbaugruppe an den Slave,
b) Empfangen des an den Slave adressierten Parametertelegramms von dem Slave,
c) Senden eines ersten Diagnosedatensegments eines zu übermittelnden Diagnosedatenpakets des Slaves an die Masterbaugruppe,
d) Wiederholen der Schritte a) und b),
e) Senden eines weiteren Diagnosedatensegments des Slaves an die Masterbaugruppe,
f) Wiederholen der Schritte a), b) und e) bis alle Diagnosedatensegmente des zu übermittelnden Diagnosedatenpakets vollständig übermittelt wurden,
g) Empfangen des jeweiligen von dem Slave an die Masterbaugruppe gesandten Diagnosedatensegmentes,
h) Generieren der Diagnosedaten aus den empfangenen Diagnosedatensegmenten,
oder einem Slave gemäß Anspruch 17 oder einer Masterbaugruppe gemäß Anspruch 18 gelöst. Vorteilhafte Weiterbildungen der Erfindung sind in den abhängigen Ansprüchen 2 bis 16 angegeben.

Der mit der Erfindung erzielte Vorteil besteht darin, dass ohne Unterbrechung des zyklischen Datenaustausches eine Übertragung von umfangreichen Diagnosedaten von dem Slave an die Masterbaugruppe ermöglicht wird. Der Umfang der Diagnosedaten wird hierbei nicht auf ein Slavetelegramm (4 Bit) begrenzt, sondern kann je nach zu übertragender Diagnosedatenmenge auf mehrere Slavetelegramme aufgeteilt werden.

Sendet beispielsweise eine Steuerung über die Masterbaugruppe ein Parametertelegramm an einen Slave, so kann der Slave als Antwort eine Diagnoseinformation über seinen aktuellen Zustand zurückmelden. Da Parametertelegramme die Übertragung von Data_Exchange-Telegrammen (Nutzdaten) nicht beeinflussen, entsteht hierdurch keine Verzögerung oder Einschränkung der zyklischen Prozessdaten. Dadurch, dass die zu übermittelnden Diagnosedaten auf mindestens zwei Slaveantworten aufgeteilt werden, kann eine erheblich verbesserte Diagnose der angeschlossenen Slaves erfolgen. Üblicherweise konnten lediglich 4 Bit Diagnosedaten und somit 16 Zustände übertragen werden. Durch das erfindungsgemäße Verfahren ist die derartig stark einschränkende Begrenzung aufgehoben, ohne den laufenden Betrieb gemäß AS-i zu behindern.

Wird der Slave seitens der Masterbaugruppe mit einem Parametertelegramm adressiert, so wird ein zu übertragendes Diagnosepaket, welches größer als 4 Bit ist und die zu übertragenden Diagnosedaten des Slaves abbildet, durch mindestens zwei Diagnosedatensegmente übertragen. Ein Diagnosedatensegment umfasst vorzugsweise 4 Bit. Der Slave antwortet folglich der Masterbaugruppe, indem er ein erstes Diagnosedatensegment des Diagnosedatenpakts an die Masterbaugruppe überträgt. Die Masterbaugruppe empfängt das Diagnosedatensegment und kontaktiert den Slave erneut mittels eines an den Slave adressierten Parametertelegramms. Hierauf antwortet der Slave mit einem noch nicht übertragenen Diagnosedatensegment des zu übertragenden Diagnosedatenpakets woraufhin die Masterbaugruppe dieses Diagnosedatensegment empfängt. Dieser Vorgang wird solange wiederholt, bis der Slave alle Diagnosedatensegmente des Diagnosedatenpakets an die Masterbaugruppe übertragen hat. Nachdem alle Diagnosedatensegmente des Diagnosedatenpakets vom Slave an die Masterbaugruppe übertragen wurden, liegt letztendlich der Masterbaugruppe das Diagnosedatenpaket und somit die Diagnosedaten des Slaves vor. Besteht ein Diagnosedatenpaket aus zwei Diagnosedatensegmenten, so muss der Slave zwei Mal seitens der Masterbaugruppe mit einem Parametertelegramm adressiert werden und antwortet folglich der Masterbaugruppe zwei Mal mit den jeweiligen Diagnosedatensegmenten des Diagnosedatenpakets. Der Slave benötigt somit zwei "Antwortzyklen" an die Masterbaugruppe um die Diagnosedaten vollständig zu übertragen. In diesem Fall ist der Schritt f) nicht mehr erforderlich. Besteht das Diagnosedatenpaket beispielsweise aus zehn Diagnosedatensegmenten, so benötigt der Slave zehn "Antwortzyklen".

Vorzugsweise beginnt der Slave mit der Übertragung eines Diagnosedatenpakets erneut, sofern es bei der Übertragung des Parametertelegramms von der Masterbaugruppe zu dem Slave zu einer Unterbrechung der planmäßigen Kommunikation kommt.

Im Schritt e), beim Senden eines weiteren Diagnosedatensegments, werden jeweils die noch nicht übermittelten Diagnosedatensegmente, des zu übermittelten Diagnosedatenpakets zwischen dem Slave und der Masterbaugruppe, von dem Slave an die Masterbaugruppe gesandt.

Die einzelnen Diagnosedatensegmente bilden zusammen ein Diagnosedatenpaket, anhand dessen die Diagnosedaten des Slaves abgebildet werden können. Der Vorteil dieser "schrittweisen" Übertragung der Diagnosedaten über das "Parameterecho" (Antwort des Slaves auf ein Parametertelegramm des Masters) besteht darin, dass der Umfang der Diagnosedaten nicht begrenzt ist und somit umfangreiche Diagnoseinformationen aus dem jeweiligen Slave von der Masterbaugruppe ausgelesen werden können. Im Vergleich zu der herkömmlichen Diagnose angeschlossener Slaves wird hierdurch eine stark verbesserte Analyse der Slaves ermöglicht, welche z.B. die Prozesssicherheit, die Wartung des Gesamtsystems, etc. stark verbessert. Das erfindungsgemäße Diagnoseverfahren bildet somit für den Anwender einen großen Vorteil.

Das Empfangen der jeweiligen von dem Slave an die Masterbaugruppe gesandten Diagnosedatensegmente gemäß Schritt g) erfolgt jeweils unmittelbar nachdem der Slave das entsprechende Diagnosedatensegment an die Masterbaugruppe sendet, d.h. die Masterbaugruppe empfängt mindestens zwei Mal ein Diagnosedatensegment von dem Slave.

Ein großer Vorteil der Erfindung besteht zum einen darin, dass die bisher definierte AS-i Kommunikation verwendet werden kann und es hierbei keine Anpassung der AS-i Spezifikation geben muss. Ferner besteht ein großer Vorteil darin, dass nahezu alle bestehenden Slaves sowie Masterbaugruppen durch beispielsweise ein Firmwareupdate oder entsprechende Änderungen mit einem derartigen Diagnoseverfahren bereichert werden können.

In einer vorteilhaften Ausführungsform der Erfindung ist der Slave dazu ausgebildet, die einzelnen Diagnosedatensegmente des Diagnosedatenpakets zu generieren.

Folglich ermittelt der Slave die zu übertragenden Diagnosedaten und sendet diese anhand einzelner Diagnosedatensegmente an die Masterbaugruppe.

In einer weiteren vorteilhaften Ausführungsform der Erfindung werden die vom Slave gesandten Diagnosedatensegmente von der Masterbaugruppe empfangen und zu einem Diagnosedatenpaket zusammengeführt und vorzugsweise ausgewertet.

Der Masterbaugruppe liegen folglich die vom Slave bereitgestellten Diagnosedaten zur Verfügung und können letztendlich weiterverarbeitet werden. Alternativ hierzu kann das Zusammenführen und/oder Auswerten der Diagnosedatensegmente bzw. des Diagnosedatenpakets ebenso in der übergeordneten Steuerung erfolgen.

In einer weiteren vorteilhaften Ausführungsform der Erfindung ist das Diagnosedatenpaket größer als 4 Bit.

Da einer Slaveantwort lediglich vier Informationsbits zur Verfügung stehen, kann die Übertragung des Diagnosedatenpakets nur über zwei Slaveantworten (Parameterechoantworten) erfolgen. Das Diagnosedatenpaket wird folglich erfindungsgemäß in mehrere Diagnosedatensegmente aufgeteilt, welche nach der Übertragung wieder zu einem Diagnosedatenpaket zusammengesetzt werden können bzw. die zu übertragenden Diagnosedaten abbilden.

In einer weiteren vorteilhaften Ausführungsform der Erfindung besteht das Diagnosedatensegment aus 4 Bit.

Das Diagnosedatensegment wird hierbei mithilfe der, einer Slaveantwort zur Verfügung stehenden, vier Informationsbits übertragen. Somit kann unverändert das bestehende AS-i Kommunikationsverfahren genutzt werden.

In einer weiteren vorteilhaften Ausführungsform der Erfindung wird ein Diagnosedatenpaket nur dann versendet, wenn eine Änderung gegenüber dem letzten versandten Diagnosedatenpaket vorliegt.

Hierdurch wird der Kommunikationsaufwand des Slaves reduziert. Sobald eine Änderung der Diagnosedaten seitens des Slaves vorliegt, werden automatisch die entsprechenden Diagnosedatensegmente (welche das geänderte Diagnosedatenpaket abbilden) als Antwort auf die nächsten Parametertelegramme der Masterbaugruppe an die Masterbaugruppe übertragen.

Ebenso ist es denkbar, dass der Slave in definierten Zeitabständen die Diagnosedaten an die Masterbaugruppe überträgt.

In einer weiteren vorteilhaften Ausführungsform der Erfindung sind unterschiedliche Gruppen von Diagnosedaten übertragbar, wobei die jeweilige Gruppe den Umfang der zu übertragenden Diagnosedaten festlegt.

Ein Slave kann folglich je nach Gruppe einen unterschiedlichen Umfang/Aufbau der zu übermittelnden Diagnoseinformation aufweisen. Es kann somit eine Klassifikation der Diagnoseinformationen hinsichtlich des Umfangs/Aufbaus erfolgen.

Vorzugsweise wird die jeweilige Gruppe der zu übertragenden Diagnosedaten anhand mindestens eines Informationsgruppenbits eines Diagnosedatensegmentes der zu übertragenden Diagnosedaten angezeigt. Auf diese Weise kann die Masterbaugruppe bzw. die übergeordnete Steuerung, vorzugsweise bereits während der Kommunikation, die jeweilige Gruppe der übermittelten Diagnosedaten erkennen.

In einer weiteren vorteilhaften Ausführungsform der Erfindung ist die Masterbaugruppe dazu ausgebildet, gezielt eine Gruppe vom Slave anzufordern.

Hierdurch kann ein gezieltes Abrufen/Ermitteln von Diagnosedaten eines Slaves seitens der Masterbaugruppe erfolgen. Die Masterbaugruppe übermittelt beispielsweise über ein spezifisches Parametertelegramm dem Slave die erwünschte Gruppe der Diagnoseinformationen (der Diagnosedaten), so dass der adressierte Slave in den darauf folgenden Antworten die entsprechenden gruppenspezifischen Diagnosedaten mittels eines Diagnosedatenpakets übermittelt.

In einer weiteren vorteilhaften Ausführungsform der Erfindung wird die Auswahl der Gruppe von dem adressierten Slave autonom aus dem Betriebszustand abgeleitet.

Auf diese Weise werden je nach vorliegendem Betriebszustand des Slaves die darauf abgestimmten Diagnosedaten übermittelt. Eine Optimierung der Diagnose angeschlossener Slaves wird hierdurch erzielt.

In einer weiteren vorteilhaften Ausführungsform der Erfindung weist mindestens ein zu übertragendes Diagnosedatensegment des Diagnosedatenpakets eine Zählerinformation auf.

Mithilfe der Zählerinformation kann das Diagnosedatenpaket aus mehreren Diagnosedatensegmenten zusammengesetzt werden. Die Zählerinformation gibt hierbei beispielsweise die Reihenfolge der Diagnosedatensegmente an. Anhand der Zählerinformation kann somit beispielsweise die Zugehörigkeit des einzelnen Diagnosedatensegments, sowie die Länge des Diagnosedatenpakets definiert werden.

In einer weiteren vorteilhaften Ausführungsform der Erfindung zeigt eine Typkennung des Diagnosedatensegmentes an, ob eine Zählerinformation oder ein Diagnosedatensatz übertragen wird.

Ein Diagnosedatenpaket weist mehrere Diagnosedatensegmente auf. Ein Diagnosedatensegment enthält hierbei vorzugsweise entweder eine Zählerinformationen oder einen Diagnosedatensatz. Die Zählerinformation definiert hierbei die Nummer/Reihenfolge ihres zugehörigen Diagnosedatensatzes. Der zugehörige Diagnosedatensatz wird beispielsweise im Anschluss (nach erneuter Adressierung durch ein Parametertelegramm der Masterbaugruppe) der Übermittlung der Zahlerinformation an die Masterbaugruppe übertragen.

Sowohl die Zählerinformation als auch der Diagnosedatensatz kann aus mehreren einzelnen Diagnosedatensegmenten eines Diagnosedatenpakets bestehen. Benötigt beispielsweise eine Zählerinformation 6 Bit so sind hierfür mindestens zwei aufeinander folgende Diagnosedatensegmente erforderlich. Je mehr Diagnosedatensegmente für eine einzelne Zählerinformation verwendet werden, desto mehr Nummern können letztendlich zur Nummerierung der einzelnen Diagnosedatensätze generiert werden. Ein Diagnosedatenpaket kann somit aus mehreren einzelnen Diagnosedatensätzen bestehen, wobei jedem einzelnen Diagnosedatensatz eine feste Nummer zugewiesen ist. Ein durch eine Nummer definierter Diagnosedatensatz kann ebenso durch mehrere Diagnosedatensegmente gebildet werden. Anhand der durch die Zählerinformation dargestellten Nummer des Diagnosedatensatzes, kann somit die Reihenfolge sowie die Zugehörigkeit der jeweiligen Diagnosedatensätze hinsichtlich der zu übermittelnden bzw. übermittelten Diagnosedaten klar definiert werden.

Durch das Verwenden einer Typkennung kann bei einem Diagnosedatensegment klar unterschieden werden, ob das Diagnosedatensegment Zählerinformationen oder einen Diagnosedatensatz enthält. Die Typkennung erfolgt vorzugsweise im höchstwertigen Bit des Diagnosedatensegmentes.

Durch das Verwenden von Zählerinformationen kann folglich eine größere Anzahl von zusammengehörenden Diagnosedatensätzen übermittelt werden und somit das zur Verfügung stehende Datenvolumen der zu übermittelnden Diagnosedaten stark vergrößert werden.

In einer weiteren vorteilhaften Ausführungsform der Erfindung bilden mehrere Diagnosedatensegmente eines Diagnosedatenpakets zusammen eine Zählerinformation und/oder einen Diagnosedatensatz.

Hierdurch kann die Anzahl der zur Verfügung stehenden Nummern (Zählerinformation) für einen zu übermittelnden Diagnosedatensatz vergrößert werden. Sowohl der Diagnosedatensatz als auch die Zählerinformation kann hierbei jeweils durch mehrere Diagnosedatensegmente gebildet werden. Auf diese Weise wird das für die Diagnose zur Verfügung stehende Datenvolumen stark vergrößert.

Ein Diagnosedatenpaket kann somit aus abwechselnden Diagnosedatensegmenten, welche eine Zählerinformation aufweisen und Diagnosedatensegmenten, welche einen Diagnosedatensatz aufweisen, bestehen.

In einer weiteren vorteilhaften Ausführungsform der Erfindung, weist ein letztes zu übertragendes Diagnosedatensegment des Diagnosedatenpakets eine Diagnosedatenpaketendinformation auf.

Auf diese Weise kann eine vollständige Übermittlung des Diagnosedatenpakets definiert und letztendlich von der Masterbaugruppe bzw. einer übergeordneten Steuerung erkannt werden.

Die Diagnosedatenpaketendinformation kann beispielsweise aus einem einzelnen Bit oder einem gesamten definierten Diagnosedatensegment bestehen.

In einer weiteren vorteilhaften Ausführungsform der Erfindung stellt das Parametertelegramm eine Übermittlung von Parameterdaten an den adressierten Slaves dar.

Der Slave wird folglich mit herkömmlichen Parametertelegrammen der Masterbaugruppe "kontaktiert". Das Parametertelegramm besteht somit nicht aus einem "Spezialcode", anhand dessen eine definierte Slaveantwort hervorgerufen wird, welche von einer Slaveantwort bei der Übermittlung eines herkömmlichen Parametertelegramms abweicht. Bei dem erfindungsgemäßen Diagnoseverfahren erfolgt die Abfrage der Diagnosedaten des Slaves somit vorzugsweise durch ein wiederkehrendes Adressieren des Slaves mit herkömmlichen Parametertelegrammen.

In einer weiteren vorteilhaften Ausführungsform der Erfindung stellt das Parametertelegramm eine Übermittlung von codierten Daten an den adressierten Slaves dar.

Der Slave kann somit gezielt durch ein vordefiniertes (codiertes) Parametertelegramm der Masterbaugruppe angesprochen werden. Vorzugsweise kann der Slave gezielt durch das codierte Parametertelegramm hinsichtlich eines erwünschten Diagnosedatenpakets abgefragt werden, so dass der Slave auf Abruf seitens der Masterbaugruppe das erwünschte Diagnosedatenpaket übermittelt. Eine gezielte Analyse der angeschlossenen Slaves wird hierdurch ermöglicht.

In einer weiteren vorteilhaften Ausführungsform der Erfindung werden neben Diagnosedaten auch Betriebsdaten über das Diagnosedatensegment übertragen.

Hierdurch kann das seitens der AS-i Spezifikation zur Verfügung stehende Kommunikationsspektrum verbessert ausgenutzt werden, so dass ein erhöhtes Datenvolumen bezüglich der Betriebsdaten ermöglicht wird.

Eine Slaveantwort des Slaves umfasst vorzugsweise 7 Bit, wobei dieser Slaveantwort 4 Informationsbits (Diagnosedatensegment) zur Verfügung stehen.

Im Folgenden werden die Erfindung und Ausgestaltungen der Erfindung anhand der in den Figuren dargestellten Ausführungsbeispiele näher beschrieben und erläutert. Es zeigen:
- FIG 1: Eine schematische Darstellung einer Masterbaugruppe, welche über ein Buskabel mit mehreren Slaves verbunden ist,
- FIG 2: ein erstes Protokoll der Parameterechotelegramme, mit denen eine Übertragung der Diagnosedaten vom Slave zu der Masterbaugruppe gewährleistet werden kann,
- FIG 3: ein zweites Protokoll der Parameterechotelegramme, mit denen eine Übertragung der Diagnosedaten vom Slave zu der Masterbaugruppe gewährleistet werden kann,
- FIG 4: ein drittes Protokoll der Parameterechotelegramme, mit denen eine Übertragung der Diagnosedaten vom Slave zu der Masterbaugruppe gewährleistet werden kann, und
- FIG 5: ein tabellarisch dargestelltes Diagnosedatenpaket.

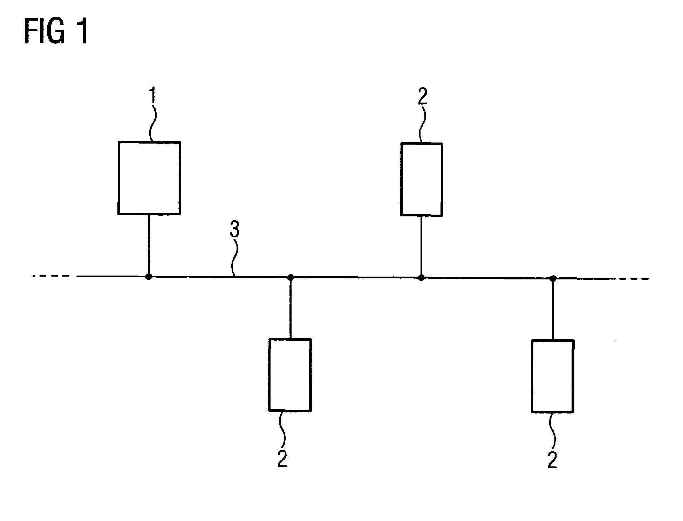

FIG 1 zeigt eine schematische Darstellung einer Masterbaugruppe 1, welche über ein Buskabel 3 mit mehreren Slaves 2 verbunden ist. Das abgebildete AS-i Feldbussystem, besteht aus einer Masterbaugruppe 1, drei Slaves 2 und einem AS-i Buskabel 3. Mithilfe des AS-i Systems lassen sich einfache Sensoren und Aktuatoren über einen Zweileiterbus 3 inklusive der Spannungsversorgung verkabeln. Jeder AS-Interface Slave 2 ist frei adressierbar und kann an beliebiger Stelle mit dem Buskabel 3 verbunden werden. Dadurch, dass jeder Slave 2 eine spezifische Adresse aufweist, wird der jeweilige Slave 2 zur Kommunikation mit der Masterbaugruppe 1 gezielt von der Masterbaugruppe 1 adressiert. Ein Slave 2 kommuniziert niemals selbstständig, sondern muss zur Kommunikation mit der Masterbaugruppe 1 von dieser adressiert und somit "angesprochen" werden.

Das industrielle Feldbussystem AS-Interface, kurz AS-i, bietet nur sehr begrenzte Möglichkeiten, um Diagnose-Informationen vom Slave 2 zu der Masterbaugruppe 1 zu übertragen. Die schnelle Behebung von Störungen ist jedoch für einen effizienten Industrieanlagenbetrieb unabdingbar. Zur Erkennung der Störungsursache und Einleitung von Reparatur- und Verbesserungsmaßnahmen genügen die herkömmlichen Diagnose-/Fehlermeldungen meist nicht.

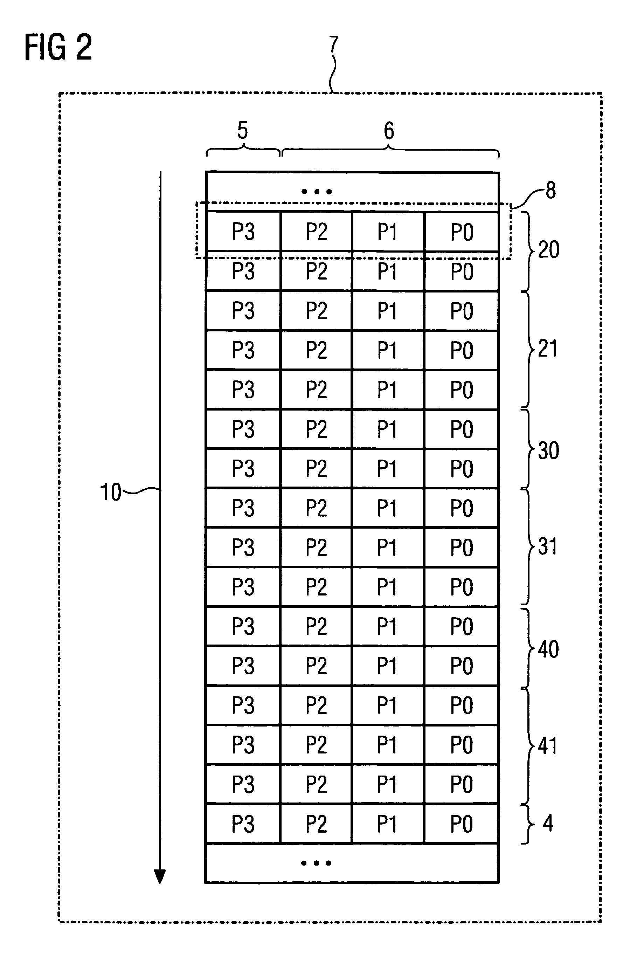

Das erfindungsgemäße Verfahren verwendet mehrere Parameterantworten (Parameterechos) eines Slaves 2, die über ein geeignetes Datenprotokoll miteinander kombiniert werden. Anstatt also nur 4 Bit Diagnosedaten aus einem einzelnen Parameterecho auszuleiten, werden viele Parameterechos, die zeitlich nacheinander aus einem Slave 2 ausgelesen werden, geeignet zusammengefügt, so dass eine quasi beliebig große Menge an Diagnosedaten aus dem Slave abgeholt werden kann (siehe FIG 2, 3, 4, 5).

Bei dem Diagnoseverfahren werden somit Diagnosedaten anhand eines Diagnosedatenpakets dargestellt, wobei das Diagnosedatenpaket durch mindestens zwei Diagnosedatensegmente gebildet wird. Zunächst sendet die Masterbaugruppe 1 ein an den Slave 2 adressiertes Parametertelegramm. Der Slave 2 empfängt dieses Parametertelegramm und sendet hierauf ein erstes Diagnosedatensegment eines zu übermittelnden Diagnosedatenpakets an die Masterbaugruppe 1. Die Diagnosedaten des Slaves 2 werden somit durch das Diagnosedatenpaket gebildet. Die Masterbaugruppe 1 empfängt das erste Diagnosedatensegment des Slaves 2 und sendet erneut ein an den Slave 2 adressiertes Parametertelegramm. Der Slave 2 antwortet hierauf erneut mit einem noch nicht versandten zweiten Diagnosedatensegment, des Diagnosedatenpakets. Die Masterbaugruppe 1 empfängt das zweite Diagnosedatensegment und kontaktiert erneut den Slave 2 über das Parametertelegramm. Dieser Vorgang wird solange wiederholt, bis alle Diagnosedatensegmente des Diagnosedatenpakets des Slaves 2 an die Masterbaugruppe 1 übertragen wurden. Letztendlich liegt der Masterbaugruppe 1 das Diagnosedatenpaket und somit die Diagnosedaten des Slaves 2 vor und können von der Masterbaugruppe 1 oder einer übergeordneten Steuerung ausgewertet werden.

Die Masterbauggruppe 1 kontaktiert folglich den Slave 2 in regelmäßigen Abständen mit einem Parametertelegramm, so dass dem Slave 2 die Möglichkeit gegeben wird Schrittweise mit Diagnosedaten zu antworten.

Im Folgenden werden unterschiedliche Ausgestaltungen der Erfindung in Bezug zur FIG 1 beschrieben.

Bei dem Diagnoseverfahren kann beispielsweise der Inhalt der Parametertelegramme der Masterbaugruppe 1 vom Diagnoseverfahren ignoriert werden, so dass unabhängig von der Diagnose beliebige Betriebsparameter an den Slave 2 gesendet werden können. Lediglich der Inhalt der Parameterechos (Slaveantwort) wird vom Verfahren (der Masterbaugruppe 1 oder einer übergeordneten Steuerung) ausgewertet. Alternativ hierzu kann aber auch der Inhalt der Parametertelegramme ganz oder teilweise in das Diagnoseverfahren einbezogen werden, um zusätzliche Informationen zu Übertragen, z.B. weitere Diagnose, Prozessdaten, Betriebsdaten, Identifikationsdaten, wartungsrelevante Daten (Maintenance), etc..

Der Inhalt der Diagnoseinformation ist unabhängig vom Übertragungsverfahren. Neben Diagnosedaten können beispielsweise auch Betriebsdaten (z.B. analoge Werte, Betriebsstundenzahler, etc.) enthalten sein. Bei entsprechender Datensicherung können eventuell auch sichere Daten Übertragen werden.

Ein großer Vorteil des erfindungsgemäßen Verfahrens besteht darin, dass erstmals eine größere Anzahl (vorzugsweise in der Größenordnung 50 Bytes) an Diagnosedaten pro AS-Interface Slave 2 übertragen werden kann, ohne die Parametrierung von Slaves 2 einzuschränken und ohne die Übertragung und den Inhalt der zyklischen Prozessdaten zu beeinflussen. Des Weiteren wird durch das Diagnoseverfahren kein neues AS-i Slave-Profil benötigt, so dass es bei Slaves 2 mit nahezu jedem bereits definierten Slave-Profil universell verwendbar ist. Das Verfahren ist somit sowohl bei einfachen AS-i Modulen (wie z.B. digitalen oder analogen Ein-/Ausgabemodulen etc.) als auch bei aufwändigen Geraten mit integriertem AS-Interface (wie z.B. Motorstarter, Frequenzumformer, etc.) anwendbar. Ein weiterer großer Vorteil ist, dass das erfindungsgemäße Verfahren kompatibel zur AS-i Spezifikation ist. Die Übertragungszeit für die Diagnose liegt hierbei im akzeptablen Rahmen (Größenordnung 30 ms pro Übertragenem Byte).

Um das erfindungsgemäße Verfahren zu implementieren werden keine produktspezifischen Software-Bausteine zur Übertragung benötigt, sondern nur ein universell einsetzbarer Software-Baustein, der nicht zwingend, direkt in der Firmware des Masters zu integrieren ist.

Durch das Diagnoseverfahren kann die Diagnosefähigkeit von AS-Interface verbessert werden, ohne Kompatibilitätsprobleme mit bisherigen Systemkomponenten aufzuwerfen. Diese Diagnose ist universell verwendbar (d.h. sie kann mit bisher vorhandenen Slave-Profilen zusammenarbeiten) und kann ohne Unterbrechung oder Verzögerung des zyklischen Datenaustausches auskommen.

Gemäß einer bevorzugten Ausführungsform der Erfindung funktioniert das Diagnoseverfahren über die Parameterechos wie folgt. Das Diagnoseverfahren liest ein Diagnosedatenpaket (größer 4 Bytes) aus einem AS-i Slave aus. Ein vollständiges Diagnosedatenpaket eines AS-i Slaves 2 besteht aus mehreren nacheinander gesendeten Diagnosedatensegmenten. Die Diagnosedatensegmente werden über Parameterechotelegramme (Slaveantwort) vom Slave 2 an die Masterbaugruppe 1 übertragen. Damit der Slave 2 Parameterechotelegramme sendet, schickt die Masterbaugruppe 1 fortlaufend Parametertelegramme an jeden einzelnen Slave 2, d.h. die Masterbaugruppe 1 schickt ständig wiederkehrend die aktuellen Parameterbits (durch Anwender eingestellte Werte oder Default-Werte), wobei der Inhalt der Parametertelegramme vom beschriebenen Diagnoseverfahren ignoriert wird. Gemäß der AS-Interface Spezifikation kann die Masterbaugruppe pro AS-i Zyklus innerhalb der Managementphase ein Parametertelegramm an einen Slave 2 schicken. Es werden somit mehrere AS-i Zyklen benötigt, um die Diagnose zu Übertragen. Ist die Managementphase durch andere Funktionsaufrufe belegt, so kann die Masterbaugruppe warten, bis die Managementphase wieder für Parametertelegramme für das Diagnoseverfahren frei ist. Ein Protokoll, das in die Parameterechotelegramme eingebettet ist, stellt sicher, dass das Diagnosedatenpaket (die Diagnosedaten) vom Slave 2 zu der Masterbaugruppe 1 gelangen.

FIG 2, 3 und 4 zeigen unterschiedliche Protokolle der Parameterechotelegramme (Slaveantworten), mit denen eine Übertragung der Diagnosedaten vom Slave zu der Masterbaugruppe gewährleistet werden kann. Hierbei sind die einzelnen Diagnosesegmente 8 eines Diagnosedatenpakets 7 in zeitlicher Abfolge 10 der Parameterechotelegramme eines Slaves abgebildet.

Für die Parameterechotelegramme (vom Slave zu der Masterbaugruppe) sind zwei Paket-Typen definiert, beispielhaft wie folgt benannt:
- Diag_Header-Paket
- Diag_Data-Paket

Das Diag_Header-Paket bildet eine Zählerinformation, so dass eine Nummerierung des darauffolgenden Diag_Data-Pakets erfolgen kann. Das Diag_Data-Paket enthält jeweils einen Diagnosedatensatz, welcher zumindest einen Teil der zu übermittelnden Diagnosedaten widerspiegelt.

Die Unterscheidung der Paket-Typen erfolgt über eine Typkennung 5, die in diesem Beispiel im höchstwertigen Bit in den Parameterechotelegrammen abgebildet ist (P3). Die Zuordnung der Werte 1 und 0 kann dabei auch umgekehrt definiert werden.
- Typkennung 5 = 1: Diag_Header-Paket
- Typkennung 5 = 0: Diag_Data-Paket

Es ist ebenso denkbar, weitere Paket-Typen zu definieren, um das Diagnosedatenpaket zusätzlich zu strukturieren.

Gemäß einer Ausführungsform des Diagnoseverfahrens wird das Diagnosedatenpaket 7, und somit die Diagnosedaten, übertragen, indem der Slave in aufeinanderfolgenden Parameteraufrufen zunächst ein oder mehrere Diag_Header-Pakete sendet und anschließend ein oder mehrere Diag Data-Pakete sendet. Dieser Vorgang wird solange wiederholt, bis die Diagnosedaten vollständig übertragen wurden. Letztendlich wird ein speziell codiertes Diag-Header-Paket (im folgenden "Abschlusstelegramm 4" benannt) gesendet, so dass die vollständige Übermittlung des Diagnosedatenpakets 7 signalisiert wird. Das Abschlusstelegramm 4 weist folglich eine Diagnosedatenpaketendinformation auf. Die auf ein Abschlusstelegramm 4 folgenden Parameterechotelegramme des Slaves 2 enthalten folglich das (erste) Diag_Header-Paket des nächsten Diagnosedatenpaketes 7. Das Abschlusstelegramm 4 ist hierbei durch ein klar definiertes 3 Bit Muster definiert, so dass es von einer Nummerierung für einen Diagnosedatensatz unterschieden werden kann.

Das Diagnosedatensegment 8, welches aus 4 Bit besteht weist folglich eine 1 Bit Typkennung 5, sowie 3 Bit eines Restdatensatzes 6 auf. Dieser Restdatensatz 6 (P2, P1, P0) des Diagnosedatensegments 8 kann entweder aus einem Diag_Header-Paket oder einem Diag_Data-Paket bestehen. Mithilfe der Diag_Header-Pakete erfolgt die Nummerierung der darauf folgenden Diag_Data-Pakete. Sowohl die Diag Header-Pakete als auch die Diag Data-Pakete können jeweils aus mehreren Diagnosesegmenten 8 gebildet werden.

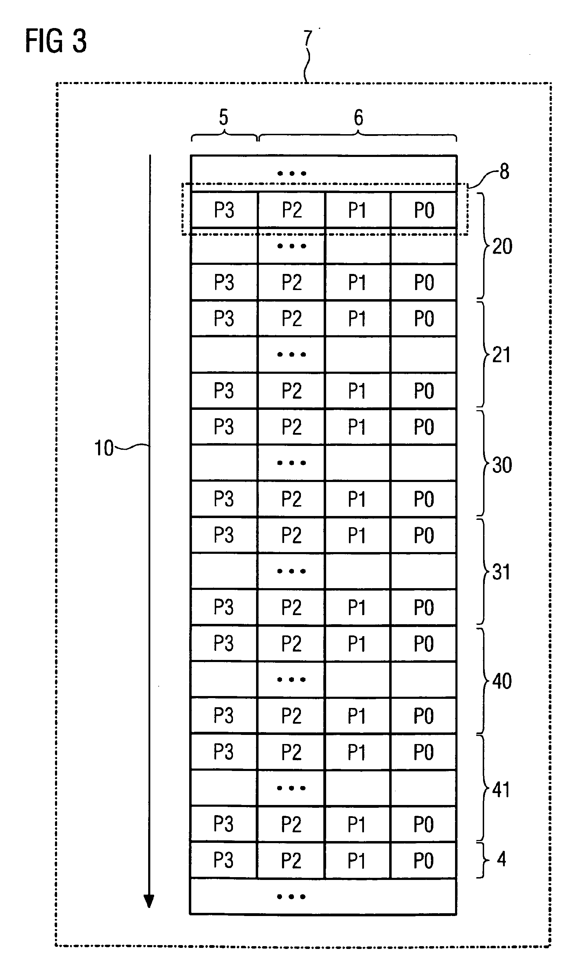

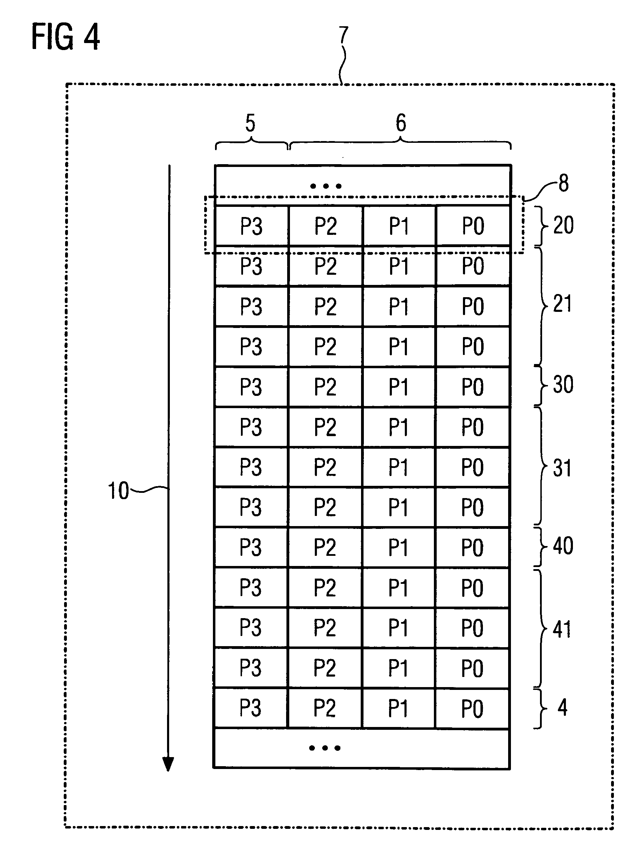

In der FIG 2 wird jeweils die Nummer der darauf folgenden Diag_Data-Pakete und somit des darauf folgenden Diagnosedatensatzes jeweils aus zwei aufeinanderfolgende Diagnosedatensegmente 8 gebildet. In der FIG 4 wird hingegen jeweils die Nummer der darauf folgenden Diag Data-Pakete aus jeweils einem Diagnosedatensegment gebildet. In der FIG 3 ist angedeutet, dass jeweils die Nummer der darauf folgenden Diag_Data-Pakete aus jeweils einer beliebigen Zahl von aufeinanderfolgenden Diagnosedatensegmente 8 gebildet wird.

Je mehr Diag Header-Pakete zur Bildung der Nummer der darauf folgenden Diagnosedatensätze verwendet werden, desto mehr Nummern können letztendlich gebildet werden. Je mehr Nummern zur Verfügung stehen umso mehr Datensätze können nummeriert werden und umso mehr Diagnosedaten können letztendlich übermittelt werden.

Sowohl in der FIG 2, 3 und 4 wird ein Diagnosedatensatz aus drei aufeinander folgenden Diagnosedatensegmenten 8 gebildet. Es ist ebenso denkbar, den Diagnosedatensatz aus einem Verknüpfen von zwei, vier oder mehr Diagnosedatensegmenten 8 oder aus nur einem Diagnosedatensegment 8 zu bilden.

Betrachtet man die zeitliche Abfolge 10 der Parameterechotelegramme eines Slaves so ist ersichtlich, dass zunächst die Nummer x 20 des darauf folgenden Diagnosedatensatzes 21 übertragen wird und anschließend der Diagnosedatensatz 21 von dem Slave an die Masterbaugruppe übertragen wird. Daraufhin wird die Nummer y 30 des darauf folgenden Diagnosedatensatzes 31 übertragen und anschließend der Diagnosedatensatz 31 von dem Slave an die Masterbaugruppe übertragen. Dieser Vorgang, senden der Nummer sowie des Diagnosedatensatzes, wird solange wiederholt, bis das vollständige Diagnosedatenpaket 7 mittels der einzelnen Diagnosedatensegmente 8 übertragen wurde. Im vorliegenden Fall wird, nachdem die Nummer z 40 des Diagnosedatensegments und anschließend der Diagnosedatensatz z 41 übertragen wurde das Abschlusstelegramm 4 übermittelt, so dass das Diagnosedatenpaket 7 und folglich die Diagnosedaten des Slaves vollständig übermittelt wurden.

Abweichend von der gezeigten zeitlichen Abfolge 10 kann auch eine andere zeitliche Abfolge definiert werden. Es ist ebenso denkbar, dass auf das Abschlusstelegramm 4 verzichtet werden kann, wenn das Ende eines Diagnosedatenpakets 7 (bzw. der Beginn eines nächsten Diagnosedatenpakets 7) dadurch gekennzeichnet wird, dass eine bereits gesendete Nummer eines Diagnosedatensatzes (Diag Header-Paket) gesendet wird, oder wenn die Information über das Ende eines Diagnosedatensatzes nicht benötigt wird (z.B. keine Konsistenz im Datensatz erforderlich).

Die Restdatenbits 6 in den Diag_Header-Paketen, die nicht für die Typkennung verwendet werden, enthalten eine Registerkennung, die die Nummer des darauf folgernden Diagnosedatensatzes repräsentiert. Da die Parameterechotelegramme aus 4 Bit bestehen, wovon 1 Bit für die Typkennung 5 benötigt wird, verbleiben 3 Bit für die Registerkennung, die somit 8 verschiedene Nummern repräsentieren kann. Da jedoch für das speziell codierte Abschlusstelegramm 4 eine Registerkennung reserviert ist, verbleiben effektiv 7 verschiedene Nummern, bei Verwendung eines einzelnen Diag_Header-Pakets pro Diagnosedatensatz, siehe FIG 4. Werden pro Diagnosedatensatz 2 Diag_HeaderPakete kombiniert, wie in FIG 2 dargestellt, so können 7 x 7 = 49 verschiedene Nummern Übertragen werden.

Gemäß FIG 3 können quasi beliebig viele Diag_Header-Pakete pro Diagnosedatensatz kombiniert werden, so dass prinzipiell 7 hoch (Anzahl Diag Header-Pakete) Nummern übertragen werden können, mit Anzahl = 1, 2, 3, etc.. Mit steigender Anzahl steigt jedoch auch die Anzahl der benötigten Telegramme und damit die Gesamtübertragungszeit der Diagnose.

Ebenso ist es dankbar, dass in einer weiteren Ausführungsform das Ende der Übertragung eines Diagnosedatensegments durch eine Kombination von Abschlusstelegrammen repräsentiert werden kann, so dass 8 hoch (Anzahl Diag_Header-Pakete) verschiedene Nummern repräsentiert werden können, wobei eine davon für die Kennung des Übertragungsendes reserviert ist. In der Praxis bedeutet diese Variante jedoch, dass ein Slave keine "Kurzquittung" (bestehend aus nur 1 Parameterecho-Paket) senden kann, wenn er keine Diagnosedaten übertragen will.

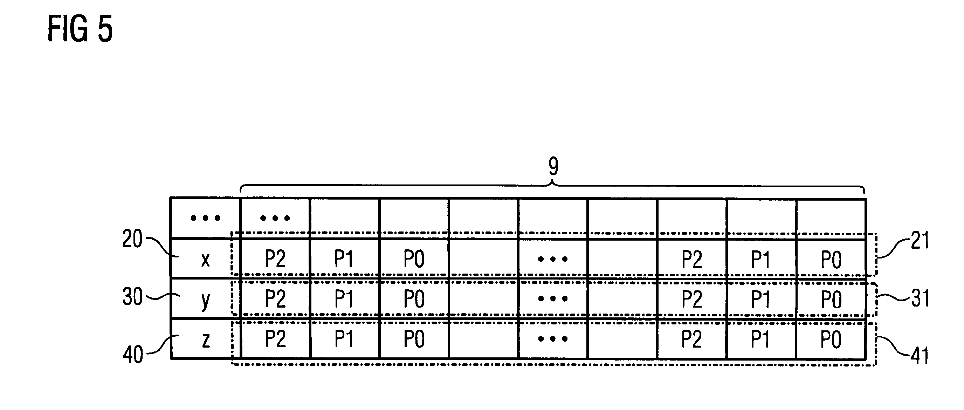

FIG 5 zeigt ein tabellarisch dargestelltes Diagnosedatenpaket. Aus einem vollständig übertragenen Diagnosedatenpaket gemäß der FIG 2, 3 oder 4 eines Slaves an die Masterbaugruppe kann eine derartige Tabelle generiert und letztendlich ausgewertet werden. Dieses Diagnosedatenpaket besteht aus mehreren Diagnosedatensätzen 9. In diesem Fall ist jedem Diagnosedatensatz x 21, y 31 und z 41 eine spezifische Nummer 20, 30, 40 zugewiesen. Die Nummer 20, 30, 40 des jeweiligen Diagnosedatensatzes 21, 31, 41 wird durch das vorangegangenen Diag_Header-Paket (bzw. Kombination von Diag_Header-Paketen) bestimmt. Aus den einer Nummer zugewiesenen Diag_Data-Paketen wird somit letztendlich ein Diagnosedatensatz 9 gebildet. Durch ein Zusammenführen der einzelnen Diagnosedatensätze 9 können letztendlich die Diagnosedaten gebildet und ausgewertet werden.

In einer weiteren Ausführungsform der Erfindung wird bei der Kommunikation von dem Slave zu der Masterbaugruppe 1 Bit für eine Paritätsprüfung (zur Prüfung der korrekten Datenübertragung) verwendet. Alternativ kann auch ein anderes Prüfverfahren mit 1 Bit oder mehreren Bits verwendet werden.

In weiteren Ausführungsformen können quasi beliebig viele Diag_Data-Pakete pro Diagnosedatensatz kombiniert werden, so dass prinzipiell 3 x (Anzahl Diag_Data-Pakete) Bit Daten pro Diagnosedatensatz übertragen werden können, mit Anzahl = 1, 2, 3, etc. Mit steigender Anzahl steigt jedoch auch die Anzahl der benötigten Telegramme und damit die Gesamtübertragungszeit der Diagnose.

Die zeitliche Reihenfolge der Diag_Header-Pakete und Diag_Data-Pakete ist in den beschriebenen Ausführungsformen beispielhaft festgelegt, sie ist jedoch prinzipiell frei definierbar. Es können ein oder mehrere verschiedene Diagnosedatensätze 9 (durch die Nummerierung gekennzeichnet) übertragen werden, deren Gesamtheit ein vollständiges Diagnosedatenpaket ergibt.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Diagnoseverfahren für ein nach dem AS-Interface Standard ausgeführtes Feldbussystem mit einer Masterbaugruppe (1) und mindestens einem Slave (2), welcher dazu ausgebildet ist, Diagnosedaten anhand eines Diagnosedatenpakets (7) darzustellen, wobei das Diagnosedatenpaket (7) durch mindestens zwei Diagnosedatensegmente (8) gebildet wird, mit folgenden Schritten:
a) Senden eines an den Slave (2) adressierten Parametertelegramms von der Masterbaugruppe (1) an den Slave (2), wobei das Parametertelegramm eine Übermittlung von Parameterdaten an den adressierten Slave (2) darstellt,
b) Empfangen des an den Slave (2) adressierten Parametertelegramms von dem Slave (2),
c) Senden eines ersten Diagnosedatensegments (8) eines zu übermittelnden Diagnosedatenpakets (7) des Slaves (2) an die Masterbaugruppe (1),
d) Wiederholen der Schritte a) und b),
e) Senden eines weiteren Diagnosedatensegments (8) des Slaves (2) an die Masterbaugruppe (1),
f) Wiederholen der Schritte a), b) und e) bis alle Diagnosedatensegmente (8) des zu übermittelnden Diagnosedatenpakets (7) vollständig übermittelt wurden,
g) Empfangen des jeweiligen von dem Slave (2) an die Masterbaugruppe (1) gesandten Diagnosedatensegmentes (8),
h) Generieren der Diagnosedaten aus den empfangenen Diagnosedatensegmenten (8).

2. Diagnoseverfahren nach Anspruch 1, wobei der Slave (2) dazu ausgebildet ist, die einzelnen Diagnosedatensegmente (8) des Diagnosedatenpakets (7) zu generieren.

3. Diagnoseverfahren nach einem der vorhergehenden Ansprüche, wobei die vom Slave (2) gesandten Diagnosedatensegmente (8) von der Masterbaugruppe (1) empfangen und zu einem Diagnosedatenpaket (7) zusammengeführt und vorzugsweise ausgewertet werden.

4. Diagnoseverfahren nach einem der vorhergehenden Ansprüche, wobei das Diagnosedatenpaket (7) größer als 4 Bit ist.

5. Diagnoseverfahren nach einem der vorhergehenden Ansprüche, wobei das Diagnosedatensegment (8) aus 4 Bit besteht.

6. Diagnoseverfahren nach einem der vorhergehenden Ansprüche, wobei ein Diagnosedatenpaket (7) nur dann versendet wird, wenn eine Änderung gegenüber dem letzten versandten Diagnosedatenpaket (7) vorliegt.

7. Diagnoseverfahren nach einem der vorhergehenden Ansprüche, wobei unterschiedliche Gruppen von Diagnosedaten übertragbar sind, wobei die jeweilige Gruppe den Umfang der zu übertragenden Diagnosedaten festlegt.

8. Diagnoseverfahren nach Anspruch 7, wobei die Masterbaugruppe (1) dazu ausgebildet ist, gezielt eine Gruppe vom Slave (2) anzufordern.

9. Diagnoseverfahren nach Anspruch 7, wobei die Auswahl der Gruppe von dem adressierten Slave (2) autonom aus dem Betriebszustand abgeleitet wird.

10. Diagnoseverfahren nach einem der vorhergehenden Ansprüche, wobei mindestens ein zu übertragendes Diagnosedatensegment (8) des Diagnosedatenpakets (7) eine Zählerinformation aufweist.

11. Diagnoseverfahren nach Anspruch 10, wobei eine Typkennung (5) des Diagnosedatensegmentes (8) angezeigt, ob eine Zählerinformation oder ein Diagnosedatensatz (9) übertragen wird.

12. Diagnoseverfahren nach Anspruch 10 oder 11, wobei mehrere Diagnosedatensegmente (8) eines Diagnosedatenpakets (7) zusammen eine Zählerinformation bilden.

13. Diagnoseverfahren nach einem der vorhergehenden Ansprüche, wobei ein letztes zu übertragendes Diagnosedatensegment (8) des Diagnosedatenpakets (7) eine Diagnosedatenpaketendinformation (4) aufweist.

14. Diagnoseverfahren nach einem der vorhergehenden Ansprüche, wobei neben Diagnosedaten auch Betriebsdaten über das Diagnosedatensegment (8) übertragen werden.

15. Slave (2), welcher dazu ausgebildet ist, gemäß einem der Ansprüche 1 bis 14, ein Diagnosedatenpaket (7) über mehrere einzelne Diagnosedatensegmente (8) zu übertragen.

16. Masterbaugruppe (1), welche dazu ausgebildet ist, gemäß einem der Ansprüche 1 bis 14, ein Diagnosedatenpaket (7) aus mehreren empfangenen Diagnosedatensegmenten (8) eines Slaves (2) zu generieren.

## Claims

1. Diagnosis method for a field bus system embodied in accordance with the AS interface standard having a master module (1) and at least one slave (2), which is embodied to display diagnosis data with the aid of a diagnosis data packet (7), wherein the diagnosis data packet (7) is formed by at least two diagnosis data segments (8), with the following steps:
a) sending a parameter telegram addressed to the slave (2) from the master module (1) to the slave (2), wherein the parameter telegram displays a transmission of parameter data to the addressed slave (2),
b) receiving the parameter telegram addressed to the slave (2) from the slave (2),
c) sending a first diagnosis data segment (8) of a diagnosis data packet (7) to be transmitted of the slave (2) to the master module (1),
d) repeating steps a) and b),
e) sending a further diagnosis data segment (8) of the slave (2) to the master module (1),
f) repeating steps a), b) and e) until all diagnosis data segments (8) of the diagnosis data packet (7) to be transmitted have been completely transmitted,
g) receiving the respective diagnosis data segment (8) sent by the slave (2) to the master module (1),
h) generating the diagnosis data from the received diagnosis data segments (8).

2. Diagnosis method according to claim 1, wherein the slave (2) is embodied to generate the individual diagnosis data segments (8) of the diagnosis data packet (7).

3. Diagnosis method according to one of the preceding claims, wherein the diagnosis data segments (8) sent by the slave (2) are received by the master module (1), and combined to form a diagnosis data packet (7) and preferably evaluated.

4. Diagnosis method according to the preceding claims, wherein the diagnosis data packet (7) is larger than 4 bits.

5. Diagnosis method according to one of the preceding claims, wherein the diagnosis data segment (8) consists of 4 bits.

6. Diagnosis method according to one of the preceding claims, wherein a diagnosis data packet (7) is only then used if a change exists by comparison with the last sent diagnosis data packet (7) .

7. Diagnosis method according to one of the preceding claims, wherein different groups of diagnosis data can be transmitted, wherein the respective group defines the scope of the diagnosis data to be transmitted.

8. Diagnosis method according to claim 7, wherein the master group (1) is embodied to intentionally request a group from the slave (2).

9. Diagnosis method according to claim 7, wherein the selection of the group from the addressed slave (2) is autonomously derived from the operating state.

10. Diagnosis method according to one of the preceding claims, wherein at least one diagnosis data segment (8) to be transmitted of the diagnosis data packet (7) comprises meter information.

11. Diagnosis method according to claim 10, wherein a type identifier (5) of the diagnosis data segment (8) indicates whether meter information or a diagnosis data set (9) is transmitted.

12. Diagnosis method according to claim 10 or 11, wherein a number of diagnosis data segments (8) of a diagnosis data packet (7) together form meter information.

13. Diagnosis method according to one of the preceding claims, wherein a latter diagnosis data segment (8) to be transmitted of the diagnosis data packet (7) has a diagnosis data packet end information (4).

14. Diagnosis method according to one of the preceding claims, wherein aside from diagnosis data, operating data is also transmitted via the diagnosis data segment (8).

15. Slave (2) which is embodied, according to one of claims 1 to 14, to transmit a diagnosis data packet (7) via a number of individual diagnosis data segments (8).

16. Master module (1) which is embodied, according to one of claims 1 to 14, to generate a diagnosis data packet (7) from a number of received diagnosis data segments (8) of a slave (2).

## Revendications

1. Procédé de diagnostic pour un système de bus de terrain réalisé suivant la norme d'interface AS, comprenant un module ( 1 ) maître et au moins un esclave ( 2 ), qui est constitué pour représenter des données de diagnostic au moyen d'un paquet ( 7 ) de données de diagnostic, le paquet ( 7 ) de données de diagnostic étant formé d'au moins deux segments ( 8 ) de données de diagnostic, ayant les stades suivants :
a) envoi d'un télégramme de paramètres, adressé à l'esclave ( 2 ), par le module ( 1 ) maître à l'esclave ( 2 ), le télégramme de paramètres représentant une transmission de données de paramètres à l'esclave ( 2 ) adressé,
b) réception par l'esclave ( 2 ) du télégramme de paramètres adressé à l'esclave ( 2 ),
c) envoi d'un premier segment ( 8 ) de données de diagnostic d'un paquet ( 7 ) de données de diagnostic transmis de l'esclave ( 2 ) au module ( 1 ) maître,
d) répétition des stades a) et b),
e) envoi d'un autre segment ( 8 ) de données de diagnostic de l'esclave ( 2 ) au module ( 1 ) maître,
f) répétition des stades a), b) et e) jusqu'à ce que tous les segments ( 8 ) de données de diagnostic du paquet de données de diagnostic à transmettre aient été transmis complètement,
g) réception du segment ( 8 ) de données de diagnostic envoyé respectivement par l'esclave ( 2 ) au module ( 1 ) maître,
h) production des données de diagnostic à partir des segments ( 8 ) de données de diagnostic reçus.

2. Procédé de diagnostic suivant la revendication 1, dans lequel l'esclave ( 2 ) est constitué pour produire les divers segments ( 8 ) de données de diagnostic du paquet ( 7 ) de données de diagnostic.

3. Procédé de diagnostic suivant l'une des revendications précédentes, dans lequel les segments ( 8 ) de données de diagnostic envoyés par l'esclave ( 2 ) sont reçus par le module ( 1 ) maître et sont réunis en un paquet ( 7 ) de données de diagnostic et sont, de préférence, exploités.

4. Procédé de diagnostic suivant l'une des revendications précédentes, dans lequel le paquet ( 7 ) de données de diagnostic est plus grand que 4 bits.

5. Procédé de diagnostic suivant l'une des revendications précédentes, dans lequel le segment ( 8 ) de données de diagnostic est constitué de 4 bits.

6. Procédé de diagnostic suivant l'une des revendications précédentes, dans lequel un paquet ( 7 ) de données de diagnostic n'est envoyé que s'il y a une modification par rapport au dernier paquet ( 7 ) de données de diagnostic qui a été envoyé.

7. Procédé de diagnostic suivant l'une des revendications précédentes, dans lequel on peut transmettre des groupes différents de données de diagnostic, le groupe respectif fixant l'étendue des données de diagnostic à transmettre.

8. Procédé de diagnostic suivant la revendication 7, dans lequel le module ( 1 ) maître est constitué pour exiger de l'esclave ( 2 ) un groupe de manière ciblée.

9. Procédé de diagnostic suivant la revendication 7, dans lequel la sélection du groupe par l'esclave ( 2 ) adressé est déduite de manière autonome de l'état de fonctionnement.

10. Procédé de diagnostic suivant l'une des revendications précédentes, dans lequel au moins un segment ( 8 ) de données de diagnostic à transmettre du paquet ( 7 ) de données de diagnostic a une information de compteur.

11. Procédé de diagnostic suivant la revendication 10, dans lequel une caractérisation ( 5 ) de type du segment ( 8 ) de données de diagnostic indique si une information de compteur ou un jeu ( 9 ) de données de diagnostic est transmis.

12. Procédé de diagnostic suivant la revendication 10 ou 11, dans lequel plusieurs segments ( 8 ) de données de diagnostic d'un paquet ( 7 ) de données de diagnostic forment ensemble une information de compteur.

13. Procédé de diagnostic suivant l'une des revendications précédentes, dans lequel un dernier segment ( 8 ) de données de diagnostic à transmettre du paquet ( 7 ) de données de diagnostic a une information ( 4 ) de fin de paquet de diagnostic.

14. Procédé de diagnostic suivant l'une des revendications précédentes, dans lequel on transmet, outre des données de diagnostic, également des données de fonctionnement par le segment ( 8 ) de données de diagnostic.

15. Esclave ( 2 ), qui est constitué pour transmettre suivant l'une des revendications 1 à 14 un paquet ( 7 ) de données de diagnostic par plusieurs segments ( 8 ) de données de diagnostic individuels.

16. Module ( 1 ) maître, qui est constitué pour produire suivant l'une des revendications 1 à 14 un paquet ( 7 ) de données de diagnostic à partir de plusieurs segments ( 8 ) de données de diagnostic reçus d'un esclave ( 2 ).
